**Europäisches Patentamt**

**European Patent Office**

**Office européen des brevets**

(11) Veröffentlichungsnummer: **0 208 899**
**B1**

# EUROPÄISCHE PATENTSCHRIFT

(45) Veröffentlichungstag der Patentschrift:
**16.08.89**

(51) Int. Cl.⁴: **B 01 D 25/15**

(21) Anmeldenummer: **86107689.1**

(22) Anmeldetag: **05.06.86**

(54) **Filterpresse mit Spreizvorrichtung.**

(30) Priorität: **07.06.85 DE 3520571**
**05.04.86 DE 3611515**

(43) Veröffentlichungstag der Anmeldung:
**21.01.87 Patentblatt 87/4**

(45) Bekanntmachung des Hinweises auf die Patenterteilung:
**16.08.89 Patentblatt 89/33**

(84) Benannte Vertragsstaaten:
**AT BE CH DE FR GB IT LI NL SE**

(56) Entgegenhaltungen:
**DE-A- 2 823 501**
**GB-A- 1 559 244**
**US-A- 3 333 702**

(73) Patentinhaber: **Erich Netzsch GmbH & Co. Holding KG,**
**Gebrüder-Netzsch-Strasse 19, D-8672 Selb (DE)**

(72) Erfinder: **Zahn, Hans, Richard Wagner-Strasse 28,**
**D-8670 Hof (DE)**

(74) Vertreter: **Wuesthoff, Franz, Dr.-Ing. et al, Patentanwälte**
**Wuesthoff -v. Pechmann-Behrens-Goetz**
**Schweigerstrasse 2, D-8000 München 90 (DE)**

## Beschreibung

Die Erfindung betrifft eine Filterpresse mit einer Vielzahl von nebeneinander angeordneten und mittels einer Verschiebeeinrichtung zum Entleeren auseinanderbewegbaren Filterplatten, welche jeweils mit Filtertuch belegt sind, das in der Entleerungsstellung zum Lösen des Filterkuchens und zum Waschen in bezug auf die Filterplatte bewegbar ist.

Derartige Filterpressen sind beispielsweise aus den deutschen Patentschriften 1 184 324 und 2 742 063 bekannt. Die Erfindung ist auf die dort beschriebenen Filterpressen anwendbar.

Zum Entleeren der Filterstoffe werden die im Betriebszustand dicht aneinandergepreßten Filterplatten vereinzelt, um den Filterkuchen ablösen zu können. In der DE-C-1 184 324 ist zum selbsttätigen Ablösen des Filterkuchens eine Einrichtung vorgesehen, mit der die Filtertücher in der vereinzelten Entleerungsstellung von der zugehörigen Filterplatte abspreizbar sind, so daß sie aus der vertikalen Stellung in eine Schrägstellung geneigt werden, in welcher sich der Filterkuchen vom Filtertuch lösen und nach unten abfallen kann. Falls der Filterkuchen nicht aufgrund seines Eigengewichtes von alleine abfällt, kann mittels eines Spachtels oder dergleichen nachgeholfen werden.

Neben der Entfernung des Filterkuchens ist von Zeit zu Zeit auch eine Waschung des Filtertuches erforderlich. Zu diesem Zweck fahren Waschdüsen zwischen die in der Vereinzelungsstellung voneinander getrennten Filterplatten und besprühen das Filtertuch mit Reinigungswasser.

Bei den bekannten Filterpressen kann die Spreizung des Filtertuches zum Entfernen der Filterkuchen nur begrenzt erfolgen, da für den Waschvorgang die Waschdüsen zwischen die gegeneinander gespreizten Filtertücher fahren müssen. Zwischen den gespreizten Filtertüchern muß also ein genügender Freiraum verbleiben, in den die Waschvorrichtung einfahren kann. Hierdurch ist der Spreizwinkel für die Filtertücher begrenzt. Es versteht sich aber, daß zum Entfernen der Filterkuchen ein möglichst großer Spreizwinkel erwünscht ist. Ein weiterer Nachteil bekannter Filterpressen liegt darin, daß die Waschung dort im Spreizzustand der Filtertücher erfolgt. Wenn in diesem Zustand die Wasch-Düsen zwischen die gespreizten Filtertücher in vertikaler Richtung hindurchfahren, ändert sich entlang des Weges der Abstand zwischen den Düsen und dem Filtertuch, da in der Spreizstellung letzteres gegen die Vertikale geneigt ist. Der ungleichmäßige Abstand zwischen den Waschdüsen un dem Filtertuch führt zu einer ungleichmäßigen Reinigung.

Der Erfindung liegt die Aufgabe zugrunde, die gattungsgemäße Filterpresse derart weiterzubilden, daß ein einfaches und wirkungsvolles Entfernen der Filterkuchen sowie eine wirksame Waschung der Filtertücher ermöglicht ist.

Die erfindungsgemäße Lösung dieser Aufgabe ist mit ihren Ausgestaltungen in den Patentansprüchen gekennzeichnet.

Gemäß der Erfindung werden also die Filtertücher in der Entleerungsstellung, in welcher die gerade zu reinigenden Filterplatten unter Abstand zueinander angeordnet sind, mittels eines Rahmens in die Spreizstellung gebracht, in welcher der Filterkuchen entfernt wird, wobei der Rahmen aber auch derart in eine zweite Stellung bewegbar ist, daß die Filtertücher wieder an der Filterplatte anliegen. Wird eine Wascheinrichtung in dieser Stellung an dem zu reinigenden Filtertuch vorbeigefahren, so ist der Abstand zwischen den Waschdüsen und dem Filtertuch über die gesamte Abwärtsbewegung der Wascheinrichtung konstant, so daß auch der Druck des auf das Filtertuch auftreffenden Wassers gleichmäßig ist.

In einer bevorzugten Weiterbildung der Erfindung wird die sowieso an der Filterpresse vorhandene Verschiebeeinrichtung, mit welcher die Filterplatten zum Reinigen verschoben und vereinzelt werden, auch dazu verwendet, die Rahmen in die Spreizstellung (erste Stellung) sowie die Anlage-Stellung des Filtertuches (zweite Stellung) zu bewegen. Hierzu sind die erfindungsgemäß für jede Filterplatte vorgesehenen zwei Rahmen jeweils auf an den Schmalseiten der Filterplatten vorstehenden Lagerbolzen schwenkbar gelagert. Unterhalb und oberhalb der Lagerbolzen sind die Rahmen mit ersten und zweiten Bolzen versehen, welche wahlweise mit zumindest einem an der Verschiebeeinrichtung angeordneten Mitnehmer in Eingriff bringbar sind, wobei ein Eingriff mit den ersten Bolzen die Rahmen in die erste und ein Eingriff mit den zweiten Bolzen die Rahmen in die zweite Stellung bewegt.

Im üblichen Betrieb wird die erfindungsgemäße Filterpresse derart gereinigt, daß sukzessive sämtliche Filterplatten vereinzelt und sodann auf die gegenüberliegende Seite der Filterpresse in Anlage mit den bereits zuvor vereinzelten Filterplatten gebracht werden, wobei in der getrennten Stellung jeweils die Filtertücher zum Entfernen des Filterkuchens gespreizt werden. Nachdem alle Filtertücher auf diese Weise vom Filterkuchen befreit sind, kann sukzessive eine Waschung der einzelnen Filtertücher erfolgen, welche dazu ebenfalls entsprechend verschoben werden.

In einer bevorzugten Ausgestaltung der Erfindung ist für die Durchführung dieser beiden Verfahrensschritte (Entfernung der Filterkuchen zum einen und Waschung zum anderen) vorgesehen, daß die ersten Bolzen auf der einen und die zweiten Bolzen auf der anderen Schmalseite der Rahmen außenseitig angeordnet sind, daß an der Verschiebeeinrichtung auf beiden Außenseiten jeweils Mitnehmer vorgesehen sind, welche in eine Betriebsstellung und eine Außerbetriebsstellung bringbar sind, und daß die Mitnehmer derart ausgebildet sind, daß sie in einer Betriebsstellung bei einer Bewegung der Verschiebeeinrichtung in Anschlag mit den Bolzen kommen, während sie in ihrer Außerbetriebsstellung an den Bolzen vorbeifahren. Auf diese Weise kann mittels der Verschiebeeinrichtung automatisch nacheinander der Filterkuchen entfernt werden, worauf nach Änderung der Betriebsstellung der Mitnehmer an der Verschiebeeinrichtung automatisch nacheinander für alle Filtertücher die Waschung vorgenommen werden kann.

Da erfindungsgemäß die Stellung des Filtertuches beim Waschen von seiner Spreizstellung beim Entfernen des Filterkuchens verschieden ist, ist der Spreizwinkel nicht durch die Bedingung eingeschränkt, daß eine Wascheinrichtung zwischen die
Filtertücher fahren muß, so daß ein relativ großer
Spreizwinkel erzielt werden kann.

Eine Anordnung der Bolzen an den Rahmen und der
dazugehörigen Mitnehmerklinken an der Verschiebevorrichtung unterhalb der Tragholme ist dann nicht
einsetzbar, wenn die Tragholme der Filterpresse zwischen ihren Endlagern abgestützt werden müssen.
Dieser Fall kann eintreten, wenn eine Filterpresse mit
größerer Filtrationsfläche, also vielen Filterplatten
oder mit Guß-Filterplatten versehen werden soll.

In einer Weiterbildung der Erfindung (gemäß den
Ansprüchen 6 ff) ist deshalb vorgesehen, daß die
Rahmen unabhängig von der Art und Weise, nach der
die Filterplatten aufgehängt sind, mit einer einfach
aufgebauten Einrichtung bewegt werden können.

Entsprechend der Weiterbildung der Erfindung
sind also in der Wasch- und in der Entleerungsstellung je zwei mit Filtertüchern versehene Rahmen mittels Riegeln miteinander verbunden. In der Entleerungsstellung sind dies zwei direkt nebeneinander
liegende Rahmen, in Waschstellung zwei zu einer Filterplatte gehörende Rahmen.

Vorteilhafterweise sind die Riegel und die zugehörigen Stifte, die sie umgreifen, seitlich an den Rahmenquerteilen angebracht. Durch diese Anordnung
reduziert sich das Geräusch, welches beim Umlegen
oder Anlegen der Platten entsteht, wenn diese zusammen oder gegen die Filterplatten schlagen.

Bei Normalbetrieb der Filterpressen kann tagelang
filtriert und gepreßt werden, ehe die Filtertücher
einer Reinigung bedürfen, so daß die Riegel zwischen
zwei benachbarten Platten in Eingriffsstellung verbleiben. In diesem Fall hängen diese Rahmen an ihrer
Kopfseite zusammen und werden durch das Auseinanderziehen der Filterplatten mit der Verschiebevorrichtung nach unten gespreizt, wobei die Filtratrückstände von den Filtertüchern ohne oder wahlweise
mit Unterstützung abfallen.

In der Waschstellung sind die Rahmen an ihren dazugehörigen Filterplatten anliegend gehalten, wozu
die Riegel zwischen den beiden benachbarten Rahmen gelöst werden und die anderen Riegel in Eingriffsstellung sind. Vorteilhafterweise sind die Riegel
für das Waschen bzw. das Entleeren jeweils an gegenüberliegenden Rahmenschmalseiten angeordnet.

Ganz gleich, auf welcher Rahmenseite entriegelt
wird, fährt dazu ein mit der Verschiebeeinrichtung
verbundener Keil auf den entsprechenden Riegel auf
und kippt ihn, wobei er damit einen Stift und den Rahmen freigibt. Um zu verhindern, daß während des
Waschens oder Reinigens auch der gegenüberliegende Riegel betätigt wird, kann der Keil von der einen
Seite der Verschiebevorrichtung auf die andere Seite
umgesteckt werden.

Zwecks einer weiteren Sicherung zur Arretierung
des Verriegelungszustandes sind zwei unter Federspannung stehende Keile vorgesehen, die auf den
Rücken der Riegel wirken und diese nach unten gedrückt halten. Diese Keile können nur auf der Seite
auf die Riegel einwirken, auf der sich kein Keil zum
Entriegeln befindet, da an ihm ein Stift sitzt, der den
unter Federkraft gehaltenen Keil arretiert.

In einer weiteren bevorzugten Weiterbildung der
Erfindung weist der Riegel an seiner unteren Seite
zwei Ausbuchtungen auf, von denen eine den Stift
eines anderen Rahmens aufnimmt, die andere die
Verlängerung des eigenen Rahmensquerteils. Die
Ausbuchtung zur Aufnahme des Stiftes hat eine Öffnung, die von der Haltenase und einem Vorsprung
begrenzt ist. Der lichte Abstand zwischen Nase und
Vorsprung ist größer als der Stiftquerschnitt. Trotzdem paßt der Stift nur in entriegelter Stellung durch
die Öffnung, da sich die Öffnungsweite in geneigter
Riegelstellung aufgrund der Haltenasen- und Vorsprungsform verkleinert.

Die beiden Seitenflächen der zweiten Ausbuchtung liegen abwechselnd an den Seiten der Verlängerung des Rahmen-Querteils an. In der Verriegelungsstellung dient eine Seite der Ausbuchtung als zusätzliche Unterstützungshilfe. Beim Anliegen der zweiten Ausbuchtungsseite am Rahmen-Querteil steht
der Riegel exakt in Entriegelungsstellung und bietet
dem Stift die größtmögliche Öffnungsweite.

Der Einsatz von Riegeln zur paarweisen Verbindung der Rahmen miteinander im oberen Bereich der
Rahmen ist nicht auf die Anordnung von Filterplatten
auf Tragholmen beschränkt.

Nachfolgend sind Ausführungsbeispiele der Erfindung anhand der Zeichnung näher beschrieben. Dabei zeigt:

Fig. 1 eine schematische Ansicht einer Seite der
Filterpresse;

Fig. 2 eine schematische Ansicht der anderen Seite der Filterpresse;

Fig. 3 eine Draufsicht auf die Hauptebene einer einzelnen Filterplatte;

Fig. 4 eine Draufsicht auf die in Fig. 3 gezeigte Filterplatte von oben;

Fig. 5 eine schematische Seitenansicht eines weiteren Ausführungsbeispieles einer Filterpresse beim
Entleeren;

Fig. 6 eine schematische Ansicht der Filterpresse
gemäß Fig. 5 beim Waschen;

Fig. 7 eine Seitenansicht der Verriegelungseinrichtung an der Verschiebevorrichtung gemäß Fig. 5 und
6 beim Entleeren;

Fig. 8 eine Seitenansicht der Verriegelungseinrichtung gemäß Fig. 7 an der Verschiebevorrichtung
beim Waschen;

Fig. 9 eine Draufsicht auf die Hauptebene einer einzelnen Filterplatte gemäß dem Ausführungsbeispiel
nach den Fig. 5 und 6;

Fig. 10 eine Draufsicht auf die Kopfseite einer Filterplatte mit zwei anliegenden Rahmen, und

Fig. 11 eine Seitenansicht auf einen Teil eines Plattenpakets mit Riegeln in Ver- oder Entriegelungsstellung.

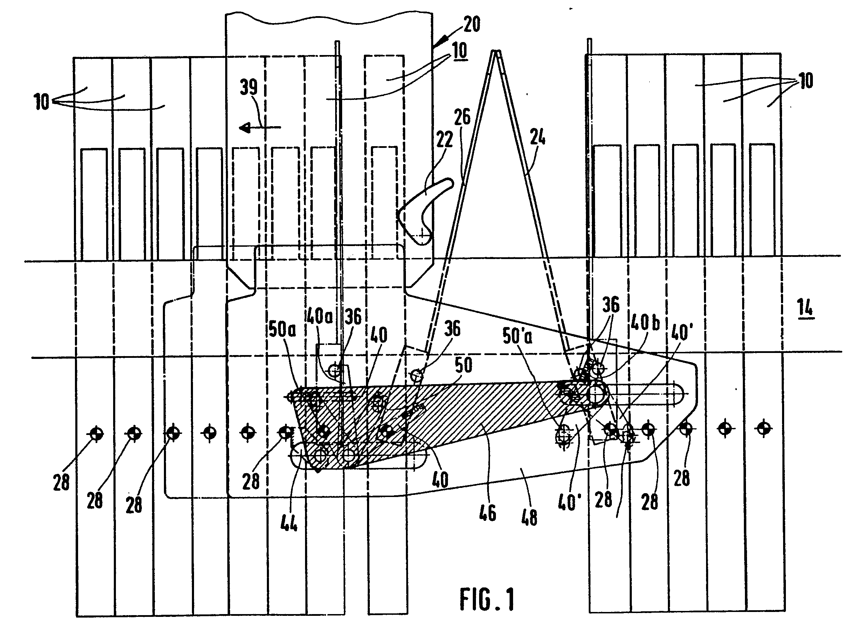

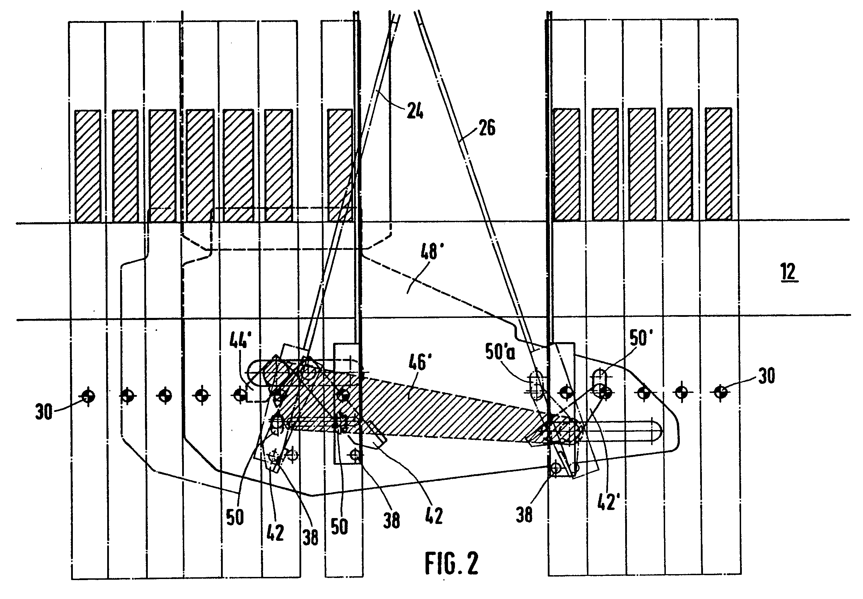

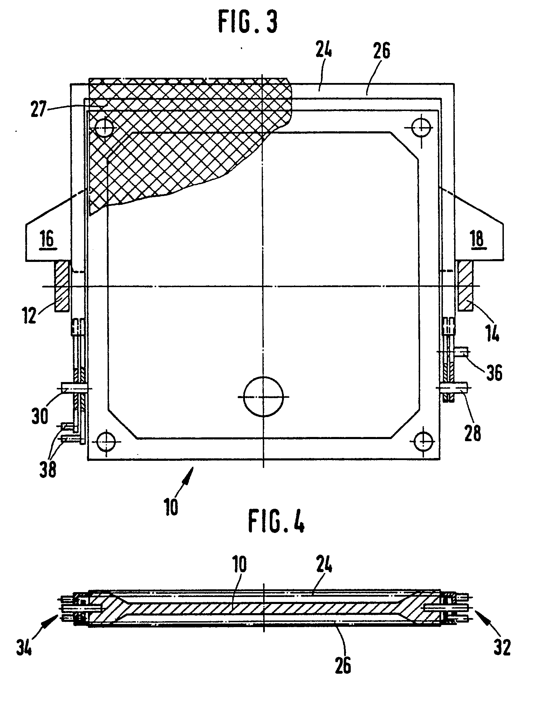

In den Fig. 1 und 2 ist ein Ausschnitt einer Filterpresse gezeigt, soweit er für das Verständnis der Erfindung erforderlich ist. Filterplatten 10 sind auf zwei
unter Abstand angeordneten Trag-Holmen 12, 14
horizontal verschiebbar gelagert. Eine derartige Anordnung ist beispielsweise aus der DE-C-1 184 324
bekannt und braucht deshalb hier nicht näher erläutert zu werden. Jede der Filterplatten 10 ist auf ihren
Schmalseiten mit zwei Griffstücken 16, 18 (Fig. 3)
versehen, welche sich an den Trag-Holmen (12, 14) abstützen. Die Filterplatten 10 sind mit Kannelierungen für den Filtratablauf versehen.

Eine schematisch angedeutete Verschiebeeinrichtung 20 ist mit einem Mitnehmer 22 versehen, mit dem die beim Filtern dicht gepackten Filterplatten 10 zu verschieben und zu vereinzeln sind. In den Fig. 1 und 2 ist zwischen der siebten Filterplatte 10 von links und der fünften Filterplatte 10 von rechts eine Lücke gebildet, so daß eine Reinigung der Filtertücher auf den freiliegenden Seiten der Filterplatten erfolgen kann.

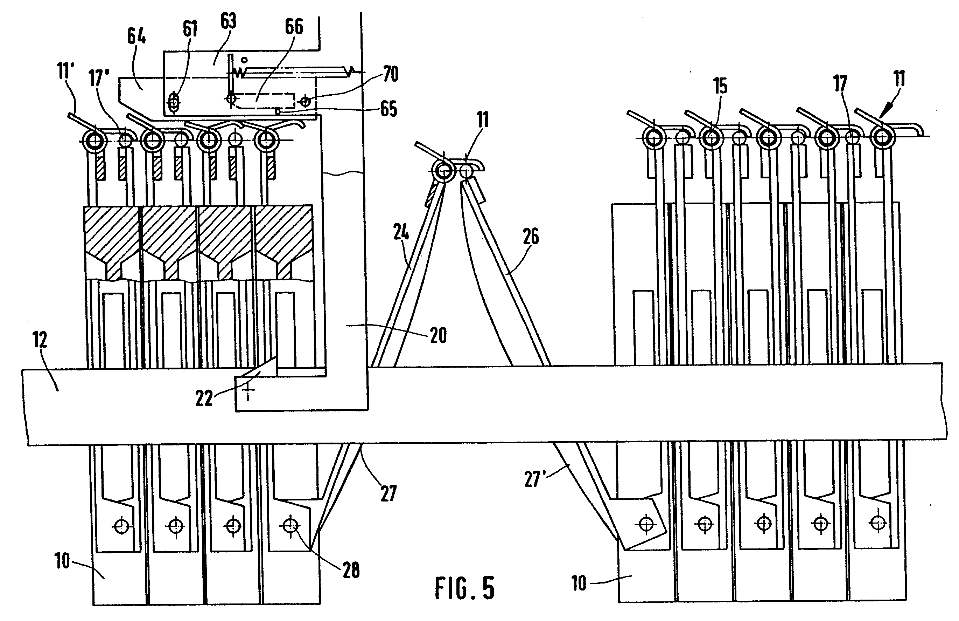

Jeder der Filterplatten 10 ist mit zwei Rahmen 24, 26 versehen, welche gemäß Fig. 3 zumindest den oberen Abschnitt der Filterplatte 10 umfangen und auf linken und rechten Lagerbolzen 28 bzw. 30 schwenkbar gelagert sind. Die Lagerbolzen 28, 30 sind fest mit der Filterplatte 10 verbunden und stehen gemäß den Fig. 3 und 4 an deren Schmalseiten 32, 34 vor.

Filtertücher 27 sind beiderseits über jede Filterplatte 10 gespannt und an deren unterem Abschnitt befestigt. Die Filtertücher 27 sind über die Rahmen 24, 26 gelegt, so daß sie bei einer Bewegung der Rahmen relativ zu den Filterplatten 10 von den Rahmen mitgenommen werden.

Die Rahmen 24, 26 sind jeweils beiderseits ihrer zugehörigen Filterplatte 10 angeordnet, wobei die durch die Rahmen aufgespannten Hauptebenen bei vertikaler Stellung der Rahmen parallel zu der Hauptebene der Filterplatte sind. Die Rahmen 24, 26 sind für jede Filterplatte 10 zwischen einer ersten und einer zweiten Stellung bewegbar. In der ersten Stellung sind die Rahmen in bezug auf die zugehörigen Filterplatte 10 abgewinkelt, d.h. nehmen die in den Fig. 1 und 2 gezeigte, gegenüber der Vertikalen geneigte Position ein. In der zweiten Stellung befinden sich die Rahmen 24, 26 über ihren Filterplatten 10, so daß ihre Hauptebenen parallel zur Hauptebene der zugehörigen Filterplatte stehen. In der ersten Stellung ist auch das von den Rahmen mitgenommene Filtertuch 27 von der zugehörigen Filterplatte 10 gelöst und gegen die Vertikale geneigt, so daß ein Filterkuchen (nicht gezeigt) in üblicher Weise entfernt werden kann. In der zweiten Stellung der Rahmen 24, 26 befindet sich das Filtertuch 27 in Anlage an die zugehörige Filterplatte 10. In dieser zweiten Stellung erfolgt die Waschung des Filtertuches mittels (nicht gezeigter) Wasch-Düsen, welche beispielsweise von oben zwischen zwei auseinandergerückte Filterplatten geführt werden.

Die Rahmen 24, 26 sind mit ersten und zweiten Bolzen 38, 36 versehen. Auf der in Fig. 1 gezeigten Seite der Filterpresse stehen die zweiten Bolzen 36 vor, welche dem Anlegen der Filtertücher 27 an die Filterplatten 10 dienen. Auf der in Fig. 2 gezeigten Seite der Filterpresse stehen die ersten Bolzen 38 von den Rahmen 24, 26 vor, welche dem Spreizen der Filtertücher 27 in bezug auf die Filterplatten 10 dienen.

Das Bewegen der Rahmen 24, 26 in die erste Stellung, in welcher die Filtertücher gespreizt (geneigt) sind, und in die zweite Stellung, in welcher die Filtertücher an den Filterplatten 10 anliegen, erfolgt mittels der Verschiebeeinrichtung 20. Auf der in Fig. 1 gezeigten Seite der Filterpresse wirkt die Verschiebeeinrichtung 20 mit den Bolzen 36 der Rahmen 24, 26 derart zusammen, daß die Rahmen in die zweite Stellung (Anlage-Stellung) bewegbar sind, während auf der in Fig. 2 gezeigten Seite der Filterpresse die Verschiebeeinrichtung 20 mit den Bolzen 38 der Rahmen 24, 26 derart zusammenwirkt, daß die Rahmen in die erste (gespreizte) Stellung bringbar sind.

Bei dem in Fig. 1 gezeigten Zustand der Filterpresse wandert die Verschiebeeinrichtung 20 gerade mit einer Filterplatte 10 in Richtung des Pfeiles 39. Eine Klinke 44 stützt sich am Lagerbolzen 28 einer zuvor verschobenen Filterplatte 10 ab. In Verbindung mit der Klinke 44 steht ein Schieber 46, welcher horizontal verschiebbar in einem Träger 48 gelagert ist. Da der Träger 48 bei der Bewegung in Richtung des Pfeiles 39 noch ein Stück bis zum Anliegen der beiden Filterplatten 10 aneinander weiterwandert, werden zwei Mitnehmer-Hebel 40, 40' über eine Kulisse im Schlitz 50 bzw. 50a nach links (Mitnehmer-Hebel 40) bzw. nach rechts (Mitnehmer-Hebel 40') geschwenkt. Beide Mitnehmer-Hebel weisen jeweils Anschlag-Kanten 40a bzw. 40b auf, welche die Bolzen 36 der Rahmen 24 bzw. 26 in Richtung auf die zugehörigen Filterplatten 10 drücken. Somit gelangen die Filtertücher 27 in Anlage an die Filterplatten 10 und können mittels Wasch-Düsen (nicht gezeigt) gewaschen werden, nachdem zuvor der Filterkuchen in der gespreizten Stellung der Filtertücher (s. unten) entfernt worden ist.

Auf der in Fig. 2 gezeigten Seite der Filterpresse befindet sich die Klinke 44', welche mit der Klinke 44 (Fig. 1) gekoppelt ist, in Eingriffstellung mit den Lagerbolzen 30 dieser Seite der Filterplatten 10. Auch hier wirken der Schieber 46' und die Mitnehmer-Hebel 42, 42' derart zusammen, daß mittels der Bewegung des Trägers 48' und entsprechende Kulissenführungen die Bolzen 38 der Rahmen 24, 26 derart beaufschlagt werden, daß sie in die Spreiz-Stellung (erste Stellung) gedrückt werden. In dieser Stellung stoßen die beiden Rahmen 24 und 26 an ihren oberen Enden gemäß Fig. 2 aneinander. Von jedem der über die Rahmen 24 bzw. 26 gespannten Filtertücher 27 fällt der beim Filtern angesammelte Filterkuchen nach unten ab, wobei gegebenenfalls ein Spachtel zu Hilfe genommen wird.

Fig. 5 zeigt einen Ausschnitt eines weiteren Ausführungsbeispieles einer Filterpresse während des Entleerungsvorgangs, bei dem die Filterplatten 10 nacheinander von der Verschiebevorrichtung 20 von der linken auf die rechte Seite verschoben werden. Dem vorstehend beschriebenen Ausführungsbeispiel entsprechende Bauteile sind mit gleichen Bezugszeichen versehen. Um die Filtrationsrückstände, die sich zwischen den Filtertüchern 27, 27' ablagern, zu entfernen, werden die Rahmen (24, 26) in eine zur Vertikalen geneigte Stellung gebracht. Dazu fährt die Verschiebevorrichtung 20 entgegen der Pfeilrichtung, bis der Mitnehmer 22 hinter dem letzten Griffstück 16 anliegt. Ebenso wie den Mitnehmer 22 trägt die Verschiebevorrichtung auf dem parallel zum Tragholm 12, 14 angeordneten Arm 63 einen Keil 64. Zum leichteren Aufgleiten weist der Keil 64 an seiner unteren Vorderseite eine Abschrägung auf. Des weiteren wird das Aufgleiten durch eine Hubbewegung des Keils 64 unterstützt, die er auf Grund seiner beweglichen Lagerung auf einem Bolzen 70 und der Führung in einem Vertikalschlitz 61 ausführen kann. Sind die Riegel 11' in geneigter Stellung, ist die Verbindung zwischen zwei Rahmen, die zu einer Filterplatte gehören, gelöst. Dagegen sichern die Riegel 11 weiterhin die Verbindung zwischen zwei unmittelbar nebeneinanderliegenden Rahmen 24, 26. Nach dem Entleerungsvorgang wird der Keil 64 von der einen Seite der Verschiebevorrichtung abgenommen und auf den gegenüberliegenden Arm aufgesteckt. Um das selbständige Lösen der Riegel 11' zu vermeiden, werden diese von einem von einer Feder beeinflußten Sperrkeil 66 nach unten gedrückt.

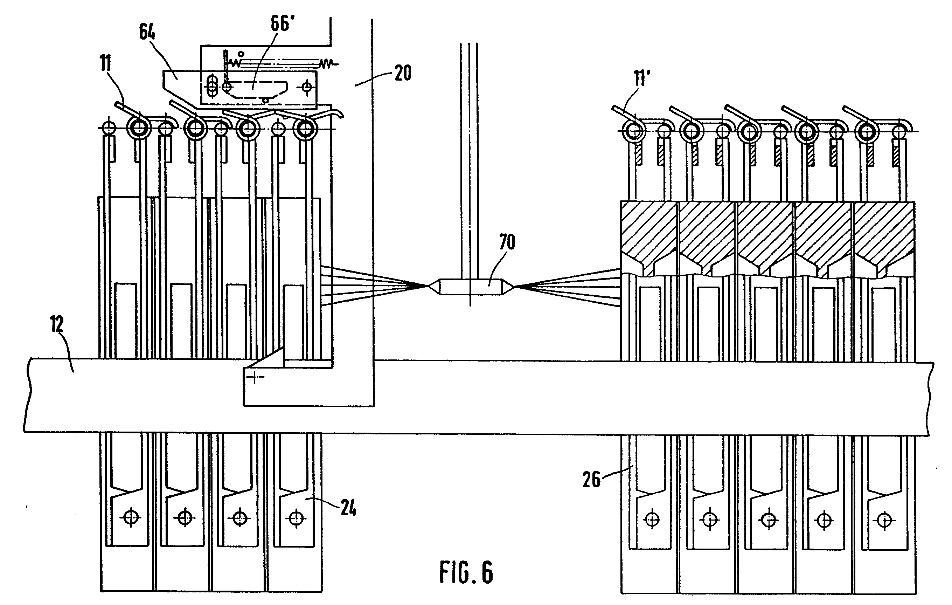

Die Fig. 6 stellt eine Filterpresse mit geöffnetem Filterplattenpaket mit an den Filterplatten senkrecht anliegenden Rahmen 24, 26 dar. In der Waschstellung halten die Rahmen 24, 26 die Filtertücher 27, 27' anliegend an den Filterplatten 10, so daß die an einem Waschbalken 70 angeordneten Spritzdüsen senkrecht zur Pfeilrichtung auf und ab gleiten können. Der Abstand zwischen den Filtertüchern 27, 27' und den Spritzdüsen ist entlang der gesamten Auf- und Abwärtsbewegung des Waschbalkens gleich. Die Darstellung verdeutlicht, daß in Waschstellung die Riegel 11 für zwei nebeneinanderliegende Rahmen gelöst sind und die auf der gegenüberliegenden Seite der Filterplatten angeordneten Riegel 11' im Einsatz sind und jeweils zwei zu einer Filterplatte gehörende Rahmen festhalten.

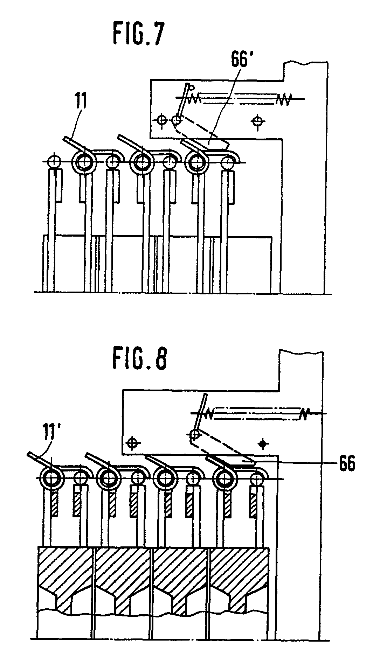

In den Fig. 7 und 8 stehen die Sperrkeile 66, 66' in Betätigungsstellung. Diese Stellung kann nur dann eingenommen werden, wenn der Keil 64 auf der gegenüberliegenden Seite der Verschiebevorrichtung steckt, weil er einen Haltestift 65 aufweist, der die Keile 66, 66' von den Riegeln 11, 11' fernhält.

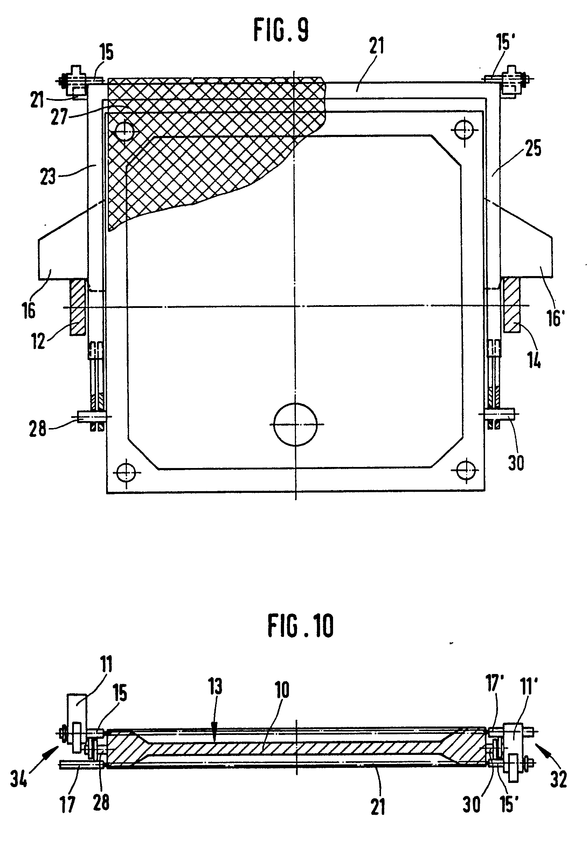

Eine nur teilweise von einem Filtertuch 27 bedeckte Filterplatte 10 zeigt die Fig. 9. An beiden Seiten der Filterplatte 10 sind an Bolzen 28, 30 die Rahmen 24, 26 befestigt. An der Oberseite der Rahmen 24, 26 stehen die Bolzen 15, 15' und die Stifte 17, 17' seitlich über die Rahmen hinaus. Jeder Rahmen 24, 26 hat zwei parallel zur Filterplatte angeordnete vertikale Seitenteile 23, 25 und ein diese verbindendes Querteil 21. Für eine besondere Ausführung der Riegel 11, 11' erstreckt sich das Querteil beiderseits über die Seitenteile hinaus und gibt diesem Riegel damit zwei Ansatzflächen. Außerdem wird das Querteil 21 vom Filtertuch 27 umschlungen.

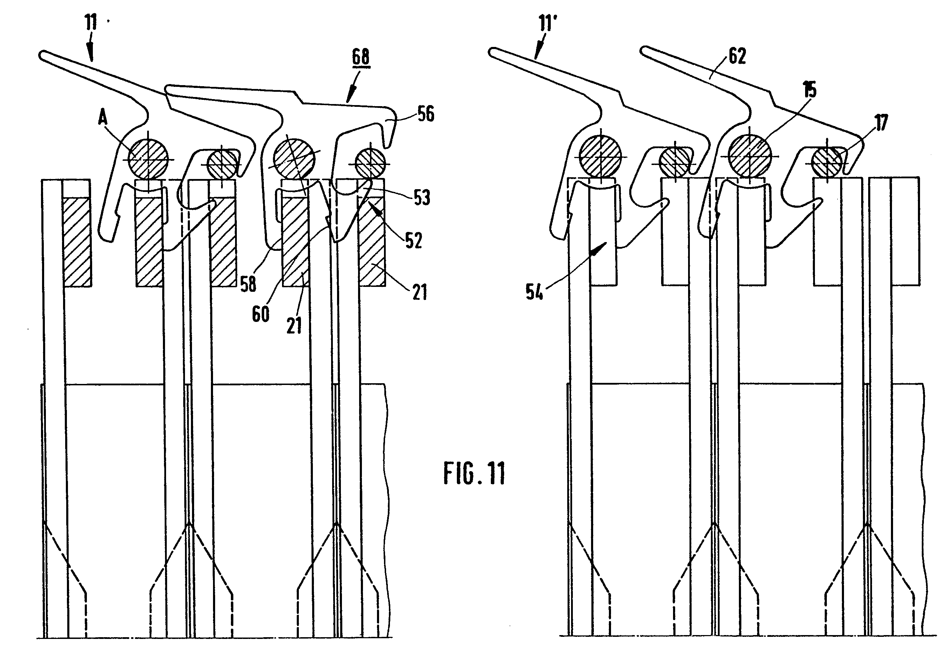

Eine besondere Gestaltungsweise der Riegel 11, 11' zeigt Fig. 11. Die Riegel 11, 11' sind kippbeweglich an den zugehörigen Bolzen 15, 15' befestigt. Ihre zwei wesentlichen Positionen sind eine Verriegelungsstellung und eine Entriegelungsstellung. In der Verriegelungsstellung, wie in Fig. 11 dargestellt, drücken die in Fig. 5 und 6 dargestellten Sperrkeile 66, 66' auf den Rücken 68 der Riegel. Dieser Druck bringt die Haltenase 56 zum Anliegen an die Stifte 17, 17'. Gleichzeitig damit legt sich die Anlagefläche 60 an das Querteil 21 der Rahmen 24, 26.

In der für diesen Riegeltyp nicht näher dargestellten Entriegelungsstellung fährt der Keil 64 mit seiner schrägen Ansatzfläche auf den Kipphebel 62 der Riegel 11, 11' auf und drückt diesen nach unten. Die Riegel 11, 11' schwenken dabei um die Achse A, bis die Ansatzfläche 58 der Ausbuchtung 54 zum Anliegen an das Querteil 21 kommt. In dieser Stellung können die Stifte 17, 17' ungehindert durch die Öffnung der Ausbuchtung 52 zwischen der Haltenase 56 und dem Vorsprung 53 austreten.

## Patentansprüche

1. Filterpresse mit einer Vielzahl von nebeneinander angeordneten und mittels einer Verschiebeeinrichtung (20) zum Reinigen auseinanderbewegbaren Filterplatten (10), welche jeweils mit Filtertuch (27) belegt sind, das in eine Entleerungsstellung zum Lösen des Filterkuchens und zum Waschen in bezug auf die Filterplatte (10) bewegbar ist, dadurch gekennzeichnet, daß an jeder Filterplatte (10) beidseitig zwei jeweils zumindest den oberen Abschnitt der Filterplatte umfangende, das Filtertuch (27) mitnehmende Rahmen (24, 26) derart angelenkt sind, daß sie in der Reinigungsstellung ihrer Filterplatte wahlweise in eine erste Stellung schwenkbar sind, in der das Filtertuch (27) in bezug auf die Hauptebene der Filterplatte (10) geneigt ist, sowie in eine zweite Stellung, in der das Filtertuch (27) an der Filterplatte (10) anliegt.

2. Filterpresse nach Anspruch 1, dadurch gekennzeichnet, daß die Rahmen (24, 26) jeweils beiderseits einer Filterplatte (10) angeordnet sind und ihre Hauptebenen in der zweiten Stellung parallel zur Hauptebene der Filterplatte (10) liegen.

3. Filterpresse nach einem der Ansprüche 1 oder 2, dadurch gekennzeichnet, daß die Rahmen (24, 26) mittels der Verschiebeeinrichtung (20) in die erste und die zweite Stellung bewegbar sind.

4. Filterpresse nach einem der vorhergehenden Ansprüche, dadurch gekennzeichnet, daß die Rahmen (24, 26) auf beidseits der Schmalseiten (32, 34) der Filterplatten (10) vorstehenden Lagerbolzen (28, 30) schwenkbar gelagert sind, welche etwa in der Höhe des unteren Viertels der Filterplatte (10) angeordnet sind.

5. Filterpresse nach Anspruch 4, dadurch gekennzeichnet, daß die Rahmen (24, 26) mit ersten und zweiten Bolzen (38 bzw. 36) versehen sind, welche wahlweise mit zumindest einem an der Verschiebeeinrichtung (20) angeordneten Mitnehmer (40, 40'; 42, 42') in Eingriff bringbar sind, wobei ein Eingriff mit den ersten Bolzen (38) die Rahmen (24, 26) in die erste und ein Eingriff mit den zweiten Bolzen (36) die Rahmen in die zweite Stellung bewegt und die ersten Bolzen (38) auf der einen und die zweiten Bolzen (36) auf der anderen Schmalseite der Rahmen (24, 26) außenseitig angeordnet sind, daß an der Verschiebeeinrichtung (20) auf beiden Außenseiten jeweils die Mitnehmer (40, 40'; 42, 42') derart angeordnet sind, daß sie in eine Betriebsstellung und eine Außerbetriebsstellung bringbar sind, daß die ersten Bolzen (38) unterhalb und die zweiten Bolzen (36) oberhalb der Lagerbolzen (28, 30) angeordnet sind, daß die Mitnehmer (40, 40'; 42, 42') als schwenkbare Hebel ausgebildet sind, die in ihrer Betriebsstellung bei einer Bewegung der Verschiebeeinrichtung (20) in Anschlag mit den Bolzen (38, 36) kommen und in ihrer Außerbetriebsstellung an den Bolzen (38, 36) vorbeifahren, daß die Hebel (40, 40'; 42, 42') derart miteinander gekoppelt sind, daß dann, wenn der Hebel auf der einen Seite der Verschiebeeinrichtung (20) in seiner Betriebsstellung ist, der andere Hebel außer Betrieb ist, daß die Hebel (40, 40'; 42, 42') durch Abstützen von Schiebern (46, 46') mittels Klinken (44, 44') am Bolzen (28, 30) einer bereits verschobenen Filterplatte in Betriebsstellung gebracht werden, und daß die Schieber (46, 46') tragende Träger (48, 48') mit Schlitzen (50, 50a; 50', 50'a) versehen sind, welche infolge einer Relativbewegung zu den Schiebern (46, 46') die Hebel (40, 40', 42, 42') in Betriebsstellung bringen.

6. Filterpresse nach einem der vorhergehenden Ansprüche, dadurch gekennzeichnet, daß an dem Rahmen (24, 26) Riegel (11) vorgesehen sind, mit denen jeweils zwei Rahmen (24, 26) miteinander verbindbar sind, wobei dies in der ersten Stellung zwei geneigte, in der zweiten Stellung jeweils zwei an den Vorderseiten einer Filterplatte (10) anliegende Rahmen sind.

7. Filterpresse nach Anspruch 6, dadurch gekennzeichnet, daß die Riegel (11) zum Verbinden zweier Rahmen in der ersten Stellung an der einen Schmalseite der Rahmen (24, 26) und die Riegel zum Verbinden der zwei Rahmen in der zweiten Stellung an der gegenüberliegenden Schmalseite der Rahmen (24, 26) angeordnet sind.

8. Filterpresse nach Anspruch 6, dadurch gekennzeichnet, daß die Riegel (11) schwenkbar auf Bolzen (15) sitzen und die Bolzen (15) seitlich über die Rahmen hinausstehen.

9. Filterpresse nach Anspruch 1, dadurch gekennzeichnet, daß jeder Riegel (11) eine Ausbuchtung (52) zur Aufnahme eines Stifts (17) und eine weitere Ausbuchtung (54) zur Aufnahme eines Rahmens (26) besitzt, wobei die den Stift (17) aufnehmende Ausbuchtung (52) mit einer Haltenase (56) und einem Vorsprung (53) versehen ist, um die Verbindung von Riegel (11) und Stift (17) bei geneigtem Rahmen (26) zu sichern, und wobei die Ausbuchtung (54) zur Rahmenaufnahme zwei Anlageflächen (58, 60) aufweist, von der die eine am Rahmen anliegt, wenn zwei Rahmen miteinander verriegelt sind und die andere dann anliegt, wenn der Riegel in entriegelter Stellung steht.

10. Filterpresse nach Anspruch 6, dadurch gekennzeichnet, daß der Stiftdurchmesser und die Öffnung der Ausbuchtung (54) so bemessen sind, daß der Stift nur in Entriegelstellung durch die Öffnung paßt.

11. Filterpresse nach Anspruch 8, dadurch gekennzeichnet, daß zur Sicherung der Verriegelung eines Rahmenpaares (24, 26) gefederte Keile (66) auf den Rücken (68) der Riegel (11) drücken, womit die Haltenase (56) am Stift (17) und die Anlagefläche (60) am Rahmen (24) anliegen.

12. Filterpresse nach Anspruch 8, dadurch gekennzeichnet, daß die an den Riegeln (11) vorgesehenen Kipphebel (62) in Verriegelstellung schräg nach oben stehen und zum Entriegeln von einem mit der Verschiebevorrichtung verbundenen Keil (64) so weit nach unten gedrückt werden, bis die Ausbuchtungsöffnung (52) so steht, daß der Stift (17) austreten kann, und daß der Keil (64) zur Entriegelung der Rahmen (24, 26) lose beweglich mit der Verschiebevorrichtung (20) verbunden ist und nach dem Entfernen der Filterrückstände von der einen Seite abnehmbar und zum Waschen an der anderen Seite der Verschiebevorrichtung anbringbar ist.

## Claims

1. A filter press comprising a plurality of filter plates (10) arranged side by side and adapted to be moved apart for cleaning by a shifting means (20), a filter cloth (27) being laid over each filter plate and being movable with respect to the filter plate (10) into an emptying position for detachment of the filter cake and for washing, characterized in that two frames (24, 26) each taking along the filter cloth (27) and embracing at least the upper portion of the filter plate are pivoted at either side of each filter plate (10) such that, with their filter plate in cleaning position, they can be pivoted selectively into a first position in which the filter cloth (27) is inclined with respect to the main plane of the filter plate (10) and a second position in which the filter cloth (27) rests against the filter plate (10).

2. The filter press as claimed in claim 1, characterized in that the frames (24, 26) each are arranged at both sides of a filter plate (10) and, in the second position, their main planes lie parallel to the main plane of the filter plate (10).

3. The filter press as claimed in claim 1 or 2, characterized in that the frames (24, 26) are movable into the first and second positions by the shifting means (20).

4. The filter press as claimed in one of the preceding claims, characterized in that the frames (24, 26) are pivotably supported on bearing pins (28, 30) which project from either of the narrow sides (32, 34) of the filter plates (10) and are located approximately at the level of the lower fourth of the filter plate (10).

5. The filter press as claimed in claim 4, characterized in that the frames (24, 26) are provided with first and second pins (38 and 36, respectively) adapted for selective engagement with at least one dog (40, 40'; 42, 42') arranged at the shifting means (20), engagement with the first pins (38) moving the frames (24, 26) into the first position and engagement with the second pins (36) moving the frames into the second position and the first pins (38) being located at the outside at the one narrow side of the frames (24, 26) and the second pins (36) being located at the outside at the other narrow side of the frames (24, 26), in that at both outer sides of the shifting means (20) the respective dogs (40, 40'; 42, 42') are arranged such as to be movable into an operative position and an inoperative position, in that the first pins (38) are disposed below the bearing pins (28, 30) and the second pins (36) above the same, in that the dogs (40, 40'; 42, 42') are embodied by pivotable levers which, when in operative position, enter into engagement with the pins (38, 36) and, when in inoperative position, move past the pins (38, 36) upon movement of the shifting means (20), in that the levers (40, 40'; 42, 42') are interconnected such that with the lever at one side of the shifting means (20) in operative position the other lever is inoperative, in that the levers (40, 40'; 42, 42') are moved into operative position by supporting sliding members (46, 46') by means of pawls (44, 44') on the pin (28, 30) of a filter plate which already has been shifted, and in that the sliding members (46, 46') are carrying members (48, 48') provided with slots (50, 50a; 50' 50'a) moving the levers (40, 40'; 42, 42') into operative position as a consequence of relative motion with respect to the sliding members (46, 46').

6. The filter press as claimed in one of the preceding claims, characterized in that tie bars (11) are provided at the frame (24, 26) to interconnect two frames (24, 26) each, these being two inclined frames in the first position and two frames each abutting against the front sides of a filter plate (10) in the second position.

7. The filter press as claimed in claim 6, characterized in that the tie bars (11) for connecting two frames in the first position are arranged at the one narrow side of the frames (24, 26) and the tie bars for connecting the two frames in the second position are arranged at the opposite narrow side of the frames (24, 26).

8. The filter press as claimed in claim 6, characterized in that the tie bars (11) are fitted pivotably on pins (15) and the pins (15) protrude laterally beyond the frames.

9. The filter press as claimed in claim 1, characterized in that each tie bar (11) has a convexity (52) to receive a peg (17) and another convexity (54) to receive a frame (26), the convexity (52) taking up the peg (17) being formed with a holding lug (56) and a protrusion (53) to lock the connection between the tie bar (11) and the peg (17) when the frame (26) is inclined, and the convexity (54) taking up the frame comprising two abutment surfaces (58, 60) one of which engages the frame when two frames are locked together and the other one is in engagement when the tie bar is in unlocked position.

10. The filter press as claimed in claim 6, characterized in that the peg diameter and the opening of the convexity (54) are dimensioned such that the peg can pass through the opening only in unlocking position.

11. The filter press as claimed in claim 8, characterized in that spring-loaded wedge members (66) press on the back (68) of the tie bars (11) to secure the interlocking of a frame pair (24, 26), whereby the holding lug (56) abuts against the peg (17) and the abutment surface (60) against the frame (24).

12. The filter press as claimed in claim 8, characterized in that the rocking arms (62) provided at the tie bars (11) project obliquely upwardly when in locking position and, for unlocking, are pressed down by a wedge member (64) linked to the shifting means until the convexity (52) reaches such a position that the peg (17) can exit, and in that the wedge member (64) for unlocking of the frames (24, 26) is linked in loosely movable fashion to the shifting means (20) and is adapted to be taken off from one end, upon removal of the filtration residues, and to be mounted at the other end of the shifting means for washing.

## · Revendications

1. Filtre-presse comportant une multiplicité de plaques filtrantes (10), qui peuvent être écartées les unes des autres pour le nettoyage et sont garnies d'un tissu filtrant (27), qui peut être amené, par rapport à la plaque filtrante (10), dans une position de vidage pour l'élimination du gateau de filtre et le lavage, caractérisé en ce que deux cadres (24, 26), entourant respectivement au moins la section supérieure de chaque plaque filtrante et entraînant le tissu filtrant (27), sont articulés sur les deux côtés de la plaque filtrante (10) de telle sorte qu'ils peuvent venir au choix par pivotement, lorsque leur plaque filtrante est dans la position de nettoyage, dans une première position, dans laquelle le tissu filtrant (27) est incliné par rapport au plan principal de la plaque filtrante (10), ainsi que dans une seconde position, dans laquelle le tissu filtrant (27) est appliqué contre la plaque filtrante (10).

2. Filtre-presse selon la revendication 1, caractérisé en ce que les cadres (24, 26) sont disposés respectivement des deux côtés d'une plaque filtrante (10) et que leurs plans principaux sont situés dans la seconde position, dans laquelle ils sont parallèles au plan principal de la plaque filtrante (10).

3. Filtre-presse selon l'une des revendications 1 ou 2, caractérisé en ce que les cadres (24, 26) peuvent être amenés, au moyen du dispositif de déplacement (20), dans les première et seconde positions.

4. Filtre-presse selon l'une des revendications précédentes, caractérisé en ce que les cadres (24, 26) sont montés, de manière à pouvoir basculer sur des tourillons (28, 30), qui font saillie sur les deux faces des petits côtés (32, 34) des plaques filtrantes (10) et sont disposés approximativement à la hauteur du quart inférieur de la plaque filtrante (10).

5. Filtre-presse selon la revendication 4, caractérisé en ce que les cadres (24, 26) comportent des premier et second tétons (38 ou 36), qui peuvent être amenés en prise au choix avec au moins un organe d'entraînement (40, 40', 42, 42') disposé sur le dispositif de déplacement (20), auquel cas l'engrènement avec un premier tégon (38) amène les cadres (24, 26) dans la première position et l'engrènement avec le second téton (36) amène les cadres dans la seconde position et les premiers tétons (38) sont disposés sur la face extérieure d'un petit côté des cadres (24, 26) et les seconds tétons (36) sont disposés sur la face extérieure de l'autre petit côté des cadres (24, 26), que les organes d'entraînement (40, 40'; 42, 42') sont disposés respectivement sur les deux côtés extérieurs du dispositif de déplacement (20) de telle sorte qu'ils peuvent être amenés dans une position active et dans une position non active, que les premiers tétons (38) sont disposés au-dessous des tourillons (28, 30) et les seconds tétons (36) sont disposés au-dessus des tourillons (28, 30), que les organes d'entraînement (40, 40'; 42, 42') sont réalisés sous la forme de leviers pivotants, qui, dans leur position active, viennent en butée contre les tétons (38, 36) et, dans leur position inactive, passent devant les tétons (38, 36), lors d'un mouvement du dispositif de déplacement (20), que les leviers (40, 40'; 42, 42') sont accouplés entre eux de telle sorte que lorsque le levier situé sur un côté du dispositif de déplacement (20) est dans sa position active, l'autre levier est dans sa position inactive, que les leviers (40, 40'; 42, 42') sont amenés dans la position active sous l'actuib de support de poussoirs (46, 46') au moyen de cliquets (44, 44') sur le tourillon (28, 30) d'une plaque filtrante déjà déplacée, et que des supports (48, 48') portant les poussoirs (46, 46') sont pourvus de fentes (50, 50a; 50', 50'a), qui, sous l'effet d'un déplacement relatif par rapport aux poussoirs (46, 46'), amènent les leviers (40, 40', 42, 42') dans la position active.

6. Filtre-presse selon l'une des revendications précédentes, caractérisé en ce qu'il est prévu, sur le cadre (24, 26), des verrous (11), à l'aide desquels respectivement deux cadres (24, 26) peuvent être reliés entre eux, ces cadres étant, dans la première position, deux cadres inclinés et, dans la seconde position, respectivement deux cadres appliqués contre les faces frontales d'une plaque filtrante (10).

7. Filtre-presse selon la revendication 6, caractérisé en ce que les verrous (11) servant à relier deux cadres dans la première position sont disposés sur un petit côté des cadres (24, 26) et que les verrous servant à relier les deux cadres dans la seconde position sont disposés sur les petits côtés opposés des cadres (24, 26).

8. Filtre-presse selon la revendication 6, caractérisé en ce que les verrous (11) sont supportés de manière à pouvoir pivoter par des axes (15) et que ces axes (15) font saillie latéralement au-delà des cadres.

9. Filtre-presse selon la revendication 1, caractérisé en ce que chaque verrou (11) comporte un évidement (52) servant à recevoir une tige (17) et un autre évidement (54) servant à recevoir un cadre (26), auquel cas l'évidement (52) recevant la tige (17) comporte un bec de retenue (56) et une partie saillante (53) servant à garantir la liaison du verrou (11) et de la tige (17) lorsque le cadre (26) est incliné, et l'évidement (54) servant à recevoir le cadre comporte deux surfaces d'appui (58, 60), dont l'une s'applique contre le cadre, lorsque deux cadres sont verrouillés l'un à l'autre, et dont l'autre s'applique contre le cadre lorsque le verrou est dans sa position déverrouillée.

10. Filtre-presse selon la revendication 6, caractérisé en ce que le diamètre de la tige et l'ouverture de l'évidement (54) sont dimensionnés de manière que la tige s'insère dans l'ouverture uniquement dans la position déverrouillée.

11. Filtre-presse selon la revendication 8, caractérisé en ce que pour garantir le verrouillage d'un couple de cadres (24, 26), des coins (66) montés élastiquement s'appliquent contre le dos (68) des verrous (11), ce qui a pour effet que le bec de retenue (56) s'applique contre la tige (17) et que la surface d'application (60) s'applique sur le cadre (24).

12. Filtre-presse selon la revendication 8, caractérisé en ce que les leviers basculants (62) prévus sur les verrous (11) font saillie obliquement vers le haut, dans la position de verrouillage, et, pour le déverrouillage, sont repoussés vers le bas par un coin (64) relié au dispositif de déplacement, jusqu'à ce que l'ouverture (52) de l'évidement soit telle que la tige (17) puisse sortir, et que le coin (64) utilisé pour le déverrouillage des cadres (24, 26) est relié de façon lâche, en étant mobile, au dispositif de déplacement (20), peut être retiré d'un côté après l'enlèvement des résidus du filtre et peut être appliqué, pour le lavage, sur l'autre côté du dispositif de déplacement.

FIG. 1

FIG. 2

FIG. 3

FIG. 4

FIG.5

FIG. 6

FIG.7

FIG.8

## FIG. 9

## FIG. 10

FIG. 11